# EUROPÄISCHE PATENTANMELDUNG

(11) **EP 4 332 830 A2**
(43) Veröffentlichungstag der Anmeldung: **06.03.2024**
(21) Anmeldenummer: 24152614.4
(22) Anmeldetag: 05.06.2023
(51) Int. Cl.: G06K 7/10

(54) **CODELESEVORRICHTUNG**

(30) Priorität: 05.07.2022 DE 102022116676
(62) Teilanmeldung aus: 23177259.1
(71) Anmelder: SICK AG, 79183 Waldkirch (DE)
(72) Erfinder: SCHÜTZ, Frank, 79365 Rheinhausen (DE); JÄCKLE, Andreas, 79108 Freiburg (DE)
(74) Vertreter: Manitz Finsterwald Patent- und Rechtsanwaltspartnerschaft mbB

(57) **Zusammenfassung**

Die Erfindung betrifft eine Codelesevorrichtung zum Erfassen eines zumindest eindimensionalen optoelektronischen Codes umfassend eine Beleuchtungseinrichtung, welche dazu eingerichtet ist, einen Sendelichtstrahl zum Erzeugen eines Sendelichtflecks auf dem zu erfassenden optoelektronischen Code auszusenden, eine Abtastvorrichtung, welche einen zumindest um eine erste Schwenkachse oszillierend schwenkbaren Schwingspiegel umfasst, welcher dazu eingerichtet ist, durch Ablenken des Sendelichtstrahls den optoelektronischen Code mit dem Sendelichtfleck sequentiell in zumindest einer ersten Abtastrichtung abzutasten, einen optoelektronischen Sensor, welcher dazu eingerichtet ist, von dem optoelektronischen Code remittiertes Sendelicht zu erfassen und in elektrische Empfangssignale umzuwandeln, und eine Steuereinrichtung, welche mit dem optoelektronischen Sensor und der Abtastvorrichtung zusammenwirkt, um die Abtastvorrichtung zu steuern und aus den Empfangssignalen einen elektronischen Code zu erzeugen, welcher in dem optoelektronischen Code codierte Informationen umfasst, und welche mit der Abtastvorrichtung zusammenwirkt, um eine Winkelposition des Schwingspiegels direkt oder indirekt zu erfassen und/oder den Schwingspiegel in eine vorgegebene Winkelposition zu verschwenken.

## Beschreibung

Die vorliegende Erfindung betrifft eine Codelesevorrichtung zum Erfassen eines zumindest eindimensionalen optoelektronischen Codes.

Eindimensionale oder zweidimensionale optoelektronische Codes werden in unterschiedlichen Anwendungsbereichen verwendet, um Artikel oder Gegenstände mit einer maschinell einlesbaren und elektronisch verarbeitbaren Kennzeichnung zu versehen. Ein häufig verwendeter eindimensionaler optoelektronischer Code ist der Strichcode oder Barcode. Dieser Code umfasst eine Abfolge von quer zu einer Abtastrichtung angeordneten hellen und dunklen Streifen, wobei die in dem Barcode (oder Strichcode) enthaltenen Informationen durch die Breite beziehungsweise den Abstand dieser Streifen in der Abtastrichtung codiert wird.

Das Erfassen von derartigen Barcodes erfolgt beispielsweise mit einem abtastenden oder scannenden Codeleser, bei dem ein Laserstrahl quer zu den Strichen oder Streifen des Barcodes geführt wird und die dabei durch Remission entstehenden Hell-Dunkel-Signale von einem Lichtsensor erfasst werden. Hierbei werden die einzelnen im Barcode codierten Zeichen sequentiell erfasst. Ferner sind noch kamerabasierte Codeleser bekannt, bei denen ein Bildsensor ein Bild des gesamten Strichcodes aufnimmt und die Codeinformationen aus diesem Bild mit Hilfe von Mitteln der Bildverarbeitung extrahiert werden.

Codeleser werden beispielsweise an Supermarktkassen oder im Bereich der Logistik zur Erfassung und Identifikation von Post- oder Paketsendungen oder auch bei der Gepäckabfertigung an Flughäfen eingesetzt.

Kamerabasierte Codeleser werden insbesondere auch zur Erfassung von zweidimensionalen Codes eingesetzt, welche auch als Matrixcode oder QR-Code bezeichnet werden. Unter einem zweidimensionalen optoelektronischen Code wird aber auch ein Code verstanden, welcher mehrere zeilenweise untereinander angeordnete Barcodes umfasst, d.h. mehrere Barcodeabschnitte sind quer zu ihrer Abtastrichtung beabstandet voneinander angeordnet, beispielsweise auf einem gemeinsamen Etikett. Prinzipiell könnte ein solcher zweidimensionaler Code auch von einem scannenden Codeleser erfasst werden.

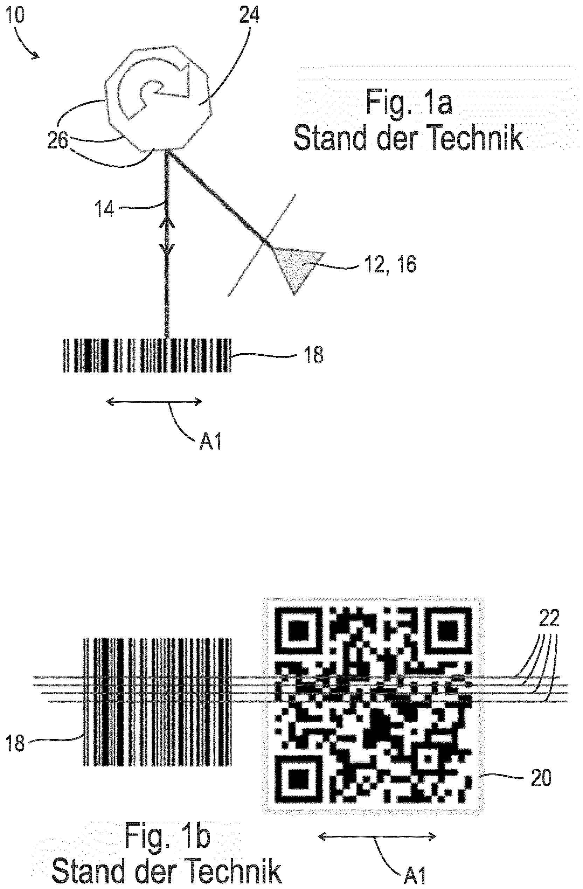

Bei einem herkömmlichen scannenden Codeleser, wie er schematisch in Fig. 1a dargestellt ist, erfolgt die periodische Abtastung des optoelektronischen Codes oftmals mit Hilfe eines auch als Facettenrad bezeichneten Polygonspiegelrades, wodurch periodisch ein Lichtfleck oder Lichtpunkt über die Hell-Dunkel-Bereiche eines Barcodes geführt wird. Das von dem Code remittierte Licht wird mittels Hohlspiegel und/oder Sammellinsen auf einen Fotodetektor fokussiert, welcher das reflektierte Licht in ein elektrisches Signal umwandelt. Der Strahlengang eines derartigen Codelesers kann insbesondere so aufgebaut sein, dass auch das remittierte Licht auf seinem Weg zwischen dem Code und dem Fotodetektor von dem Polygonspiegelrad abgelenkt wird.

Ein Problem bei herkömmlichen Codelesern, welche ein Polygonspiegelrad aufweisen, besteht darin, dass die einzelnen Facetten oder Spiegel eines solchen Polygonspiegelrads häufig nicht exakt ausgerichtet sind. Dies führt dazu, dass die von einzelnen Spiegeln erzeugten Abtastspuren nicht exakt auf einer Linie liegen, sondern einen gewissen seitlichen Versatz quer zur Abtastrichtung aufweisen. Hierdurch ist die Präzision des Abtastvorgangs reduziert.

Es ist die Aufgabe der Erfindung, eine Codelesevorrichtung zum Erfassen eines zumindest eindimensionalen optoelektronischen Codes anzugeben, welche eine erhöhte Präzision aufweist.

Die Lösung der Aufgabe erfolgt durch die Merkmale des Anspruchs 1. Eine erfindungsgemäße Codelesevorrichtung zum Erfassen eines zumindest eindimensionalen optoelektronischen Codes umfasst eine Beleuchtungseinrichtung, welche dazu eingerichtet ist, einen Sendelichtstrahl zum Erzeugen eines Sendelichtflecks auf dem zu erfassenden optoelektronischen Code auszusenden, eine Abtastvorrichtung, welche einen zumindest um eine erste Schwenkachse oszillierend schwenkbaren Schwingspiegel umfasst, welcher dazu eingerichtet ist, durch Ablenken des Sendelichtstrahls den optoelektronischen Code mit dem Sendelichtfleck sequentiell in zumindest einer ersten Abtastrichtung abzutasten, einen optoelektronischen Sensor, welcher dazu eingerichtet ist, von dem optoelektronischen Code remittiertes Sendelicht zu erfassen und in elektrische Empfangssignale umzuwandeln, und eine Steuereinrichtung, welche mit dem optoelektronischen Sensor und der Abtastvorrichtung zusammenwirkt, um die Abtastvorrichtung zu steuern und aus den Empfangssignalen einen elektronischen Code zu erzeugen, welcher in dem optoelektronischen Code codierte Informationen umfasst.

Bei der erfindungsgemäßen Codelesevorrichtung handelt es sich demnach um einen abtastenden oder scannenden Codeleser, welcher die einzelnen Zeichen oder Symbole des Codes sequentiell, d.h. zeitlich nacheinander erfasst. Der oszillierend schwenkbare Schwingspiegel ist ein Spiegel, welcher periodisch innerhalb eines begrenzten Winkelbereichs oszilliert bzw. hin- und herschwenkt. Bei der genannten Steuereinrichtung kann es sich insbesondere um eine kombinierte Steuer- und Auswerteeinrichtung handeln, welche in einer synchronisierten Weise die Abtastvorrichtung steuert und die Empfangssignale von dem optoelektronischen Sensor empfängt. Der Lichtfleck weist bevorzugt einen punktförmigen oder auch strichförmigen Querschnitt auf, wobei unter einem punktförmigen Querschnitt ein im Wesentlichen kreisförmiger Lichtfleck mit einem sehr kleinen Querschnitt verstanden wird, welcher kleiner ist als ein Zeichen des zu erfassenden optoelektronischen Codes. Der Strahlengang der erfindungsgemäßen Codelesevorrichtung ist bevorzugt so eingerichtet, dass der Code entlang einer geraden Abtastlinie oder Abtastspur abgetastet wird.

Im Unterschied zu einem Polygonspiegelrad oder Facettenrad, welches sich kontinuierlich bevorzugt mit gleichbleibender Drehgeschwindigkeit in eine bestimmte Drehrichtung dreht und eine Mehrzahl von Spiegelflächen aufweist, umfasst ein Schwingspiegel nur eine Spiegelfläche, wobei sich die Drehrichtung des Schwingspiegels periodisch ändert, zumeist mehrmals in der Sekunde. Der Winkelbereich, in welchem die periodische Hin- und Herbewegung stattfindet, ist in der Regel begrenzt und auf den Abstand zwischen dem Code und der Codelesevorrichtung sowie der geometrischen Länge des Codes in Abtastrichtung abgestimmt.

Ein Vorteil der erfindungsgemäßen Codelesevorrichtung besteht darin, dass sich der abtastende Sendelichtfleck in aufeinander folgenden Abtastperioden stets auf derselben Abtastspur bewegt. Laterale Abweichungen von der Abtastspur sind im Vergleich zu einem Codeleser mit einem Polygonspiegelrad erheblich reduziert. Ein Vorteil gegenüber einer kamerabasierten Codelesevorrichtung besteht andererseits darin, dass für die Verarbeitung der erfassten Signale aufgrund der sequentiellen Abfolge nur eine verhältnismäßig geringere Rechenleistung benötigt wird, wodurch sich ein Kostenvorteil ergibt.

Gemäß einer bevorzugten Ausführungsform ist der Schwingspiegel zusätzlich um eine zweite Schwenkachse oszillierend schwenkbar, um den optoelektronischen Code durch Ablenken des Sendelichtstrahls mit dem Sendelicht sequentiell zusätzlich in einer zweiten Abtastrichtung abzutasten. Damit kann die Relativlage der Abtastlinie quer zur Abtastrichtung verändert werden oder es kann auch ein zweidimensionaler optoelektronischer Code abgetastet werden, was nachfolgend noch näher erläutert wird. Bevorzugt verläuft die zweite Schwenkachse senkrecht zu der ersten Schwenkachse. Daraus ergibt sich insbesondere der Vorteil, dass die zweite Abtastrichtung senkrecht zu der ersten Abtastrichtung verläuft, was insbesondere bei der nachfolgend erläuterten Abtastung von zweidimensionalen (Matrix-)Codes von Vorteil ist.

Gemäß einer weiteren bevorzugten Ausführungsform ist der zu erfassende optoelektronische Code zweidimensional, wobei die Abtastvorrichtung dazu eingerichtet ist, den optoelektronischen Code zeilenweise abzutasten. Dadurch kann - wie vorstehend erwähnt - ein zweidimensionaler optoelektronischer Code, beispielsweise ein Matrixcode oder ein QR-Code abgetastet werden. Derartige Matrixcodes umfassen eine Vielzahl von in Reihen und Spalten angeordneten, meist quadratischen Symbolen, welche einen Hell-Dunkel-Kontrast oder auch einen Farbkontrast codieren. Die Abtastung eines solchen zweidimensionalen Codes erfolgt in der Regel Codezeile für Codezeile, wobei nach Abtastung einer Zeile durch Schwenken des Schwingspiegels um die erste Schwenkachse, der Schwingspiegel um einen kleinen Betrag um die zweite Schwenkachse verschwenkt wird, so dass bei einer folgenden Periode der Schwenkbewegung um die erste Schwenkachse eine benachbarte Zeile des zweidimensionalen Codes abgetastet wird. Grundsätzlich können die Abtastzeilen aber auch schräg zu den Codezeilen verlaufen.

Gemäß einer weiteren bevorzugten Ausführungsform umfasst die Abtastvorrichtung mindestens einen translatorisch wirkenden Aktuator, welcher mit dem Schwingspiegel über eine Schubstange zusammenwirkt, um den Schwingspiegel um eine jeweilige Schwenkachse zu verschwenken. Der translatorisch wirkende Aktuator ist somit ein Linearantrieb, beispielsweise ein Linearschrittmotor, ein Piezoantrieb oder auch ein Solenoidantrieb, was nachfolgend noch näher erläutert wird. Die Schubstange ist von der Schwenkachse beabstandet an dem Schwingspiegel angelenkt und transformiert die Linearbewegung des Aktuators in eine Drehbewegung des Schwingspiegels. Der Winkelbereich, innerhalb dessen der Schwingspiegel verschwenkt werden kann, ergibt sich hauptsächlich aus dem Stellweg des Aktuators und dem Abstand des Anlenkpunktes der Schubstange an dem Schwingspiegel. Hierdurch lässt sich auf kostengünstige Weise ein oszillierender Antrieb für den Schwingspiegel herstellen, welcher das oszillierende Verschwenken des Schwingspiegels mit der erforderlichen Frequenz ermöglicht.

In dem Zusammenhang hat es sich als vorteilhaft erwiesen, wenn die Schubstange in einem Koppelpunkt an dem Schwingspiegel angelenkt ist, wobei der Koppelpunkt von der zugeordneten Schwenkachse beabstandet ist. Sofern der Schwingspiegel um mehrere Schwenkachsen schwenkbar ist, handelt es sich bei der zugeordneten Schwenkachse um diejenige Schwenkachse, um welche der Schwingspiegel mit dem vorstehend genannten Aktuator und der damit verbundenen Schubstange verschwenkt wird. Alternativ kann eine Anlenkung der Schubstange auch an einem Kurbelarm erfolgen, welcher ebenso wie der Schwingspiegel mit einer die Schwenkachse definierenden Welle drehfest verbunden ist.

Gemäß einer weiteren bevorzugten Ausführungsform ist der translatorisch wirkende Aktuator als ein Solenoidantrieb ausgebildet, welcher eine Spule, bevorzugt eine Zylinderspule, und einen Permanentmagneten umfasst, der mittels eines von der Spule erzeugten Magnetfeldes linear versetzbar ist. Die Spule und der Permanentmagnet sind hierbei so angeordnet, dass das von der Zylinderspule erzeugte Magnetfeld in Abhängigkeit von der Polarität des durchfließenden Stroms den Permanentmagneten entweder anzieht oder abstößt, wodurch die Hin- und Herbewegung des Schwingspiegels erzeugt werden kann. Solenoidantriebe stellen kostengünstig herzustellende translatorisch wirkende Aktuatoren dar, die zugleich mit der zum Abtasten notwendigen Frequenz betrieben werden können.

In dem Zusammenhang kann es vorteilhaft sein, wenn der Solenoidantrieb eine Dämpfungseinrichtung, bevorzugt ein Reibungselement oder ein Federelement umfasst, welches dazu eingerichtet ist, eine Bewegung des Permanentmagneten zu dämpfen, wenn zum Beispiel ohnehin vorhandene Reibungskräfte keine ausreichende Dämpfungswirkung entfalten bzw. wenn Position und Geschwindigkeit des Permanentmagneten nicht ausreichend durch die Magnetfeldstärke festgelegt werden können. Die Dämpfungseinrichtung kann in den Solenoidantrieb integriert sein oder auch an dem Schwingspiegel oder der Schwenkachse angreifen und dient dazu, den Verlauf der Hin- und Herbewegung des Schwingspiegels zu kontrollieren, insbesondere dessen Drehgeschwindigkeit und/oder Drehbeschleunigung. Hierbei kann ein Reibungselement die Bewegung des Permanentmagneten verlangsamen. Bei der Verwendung eines Federelements kann eine Kraft-Weg-Beziehung zwischen der Verstellposition des Schwingspiegels und der Feldstärke der Zylinderspule hergestellt werden, wobei die Feldstärke wiederum von der Stromstärke des die Zylinderspule umfließenden Betriebsstroms abhängt. Unter Einbeziehung weiterer Faktoren, insbesondere geometrischer Parameter, kann somit durch Einstellen einer bestimmten Stromstärke eine gewünschte Winkelposition angefahren werden. Hierfür kann beispielsweise die Stromstärke entsprechend einer vorgegebenen Rampenfunktion eingestellt werden.

Für ein Abtasten eines zweidimensionalen optoelektronischen Codes kann gemäß einer Ausführungsform ein zweiter, um eine zugeordnete weitere Schwenkachse oszillierend schwenkbarer Schwingspiegel vorgesehen sein, welcher in der Ausbreitungsrichtung des Sendelichtstrahls betrachtet sowohl vor dem ersten Schwingspiegel als auch hinter dem ersten Schwingspiegel angeordnet sein kann. Die Schwenkachsen der beiden Schwingspiegel verlaufen bevorzugt senkrecht zueinander. Mit Hilfe des zweiten Schwingspiegels kann der zu erfassende optoelektronische Code auch in einer zweiten Abtastrichtung, welche bevorzugt senkrecht zur ersten Abtastrichtung verläuft, abgetastet werden.

Alternativ ist jedoch gemäß einer besonders bevorzugten Ausführungsform der Erfindung der Schwingspiegel, d.h. der eine eingangs genannte Schwingspiegel, zusätzlich um eine zweite Schwenkachse oszillierend schwenkbar, wobei die Abtastvorrichtung einen ersten translatorisch wirkenden Aktuator umfasst, welcher mit dem Schwingspiegel über eine erste Schubstange, welche in einem von der ersten Schwenkachse beabstandeten ersten Koppelpunkt an dem Schwingspiegel angelenkt ist, zusammenwirkt, um den Schwingspiegel um die erste Schwenkachse zu verschwenken, wobei die erste Schwenkachse in einem Lagerpunkt um die zweite Schwenkachse kippbar und um die erste Schwenkachse rotierbar gelagert ist, und wobei die Abtastvorrichtung einen zweiten translatorisch wirkenden Aktuator umfasst, welcher mit der ersten Schwenkachse über eine zweite Schubstange, welche in einem von dem Lagerpunkt beabstandeten zweiten Koppelpunkt an der ersten Schwenkachse angelenkt ist, zusammenwirkt, um den Schwingspiegel um die zweite Schwenkachse zu verschwenken. Der zweite Koppelpunkt wird somit über die Schubstange entlang einer Kreisbahn im Raum bewegt, wodurch die Lage der ersten Schwenkachse im Raum durch Verkippen bzw. Verschwenken um die zweite Schwenkachse geändert werden kann. Die zweite Schwenkachse verläuft durch den Lagerpunkt der ersten Schwenkachse, welcher somit im Schnittpunkt der beiden Schwenkachsen liegt. Auf diese Weise lässt sich auf einfache Weise mit Hilfe von zwei Linearantrieben und einem einzigen Schwingspiegel eine Abtastung von zweidimensionalen optoelektronischen Codes realisieren. Vorteilhafterweise verlaufen beide Schwenkachsen senkrecht zueinander, wodurch auch beide Abtastrichtungen orthogonal zueinander ausgerichtet sind. Ein weiterer Vorteil dieser Ausführungsform besteht darin, dass hierbei auch in Anwendungen, bei denen in der Regel nur ein eindimensionaler Strichcode erfasst wird, vorübergehend auch eine Erweiterung auf zweidimensionale Codes möglich ist, welche ansonsten nur durch erheblich kostspieligere kamerabasierte Lösungen realisierbar wäre.

Gemäß einer weiteren bevorzugten Ausführungsform umfasst die Abtastvorrichtung zumindest einen rotatorisch wirkenden Aktuator, welcher mit dem Schwingspiegel direkt oder indirekt zusammenwirkt, um den Schwingspiegel um eine jeweilige Schwenkachse zu verschwenken. Bei dem rotatorisch wirkenden Aktuator kann es sich beispielsweise um einen Motor, einen (Dreh-)Spulenantrieb, oder einen Schrittmotor handeln. Grundsätzlich kann auch gemäß einer Abwandlung der vorstehend beschriebenen bevorzugten Ausführungsform mit zwei translatorisch wirkenden Aktuatoren einer oder auch beide dieser translatorisch wirkenden Aktuatoren durch einen rotatorisch wirkenden Aktuator ersetzt werden. Bei einer direkten Kopplung ist beispielsweise eine jeweilige Drehachse des Aktuators unmittelbar mit der zugeordneten Schwenkachse des Schwingspiegels gekoppelt. Bei einer indirekten Kopplung kann beispielsweise ein Getriebe oder auch eine kardanische Aufhängung (bei zwei rotatorisch wirkenden Aktuatoren) zwischen dem Aktuator und dem Schwingspiegel vorgesehen sein.

Gemäß einer weiteren bevorzugten Ausführungsform umfasst der zu erfassende optoelektronische Code binäre Symbole, welche durch helle und dunkle Codebereiche definiert sind. Bei den Symbolen kann es sich beispielsweise um Streifen unterschiedlicher Breite oder um quadratische Flächen handeln. Die Codelesevorrichtung ist bei einer solchen Ausgestaltung zur Abtastung und gegebenenfalls Auswertung eines solchen Codes ausgestaltet.

Gemäß einer weiteren vorteilhaften Ausführungsform wirkt die Steuereinrichtung mit der Abtastvorrichtung zusammen, um eine Winkelposition des Schwingspiegels direkt oder indirekt zu erfassen und/oder den Schwingspiegel in eine vorgegebene Winkelposition zu verschwenken. Hierdurch kann insbesondere die Genauigkeit der Abtastung des Codes verbessert werden, da sich eine jeweilige Winkelposition der Abtastvorrichtung, welche den Ort auf dem optoelektronischen Code definiert, an dem zu einem bestimmten Zeitpunkt ein Abtastsignal ermittelt wird, erfassen lässt oder gezielt anfahren lässt. Für das direkte Erfassen der Winkelposition kann beispielsweise ein entsprechender Winkelpositionsgeber vorgesehen sein, welcher mit der Steuereinrichtung zusammenwirkt. Ein indirektes Erfassen kann beispielsweise durch eine Positionsmesseinheit oder einen Positionsgeber erfolgen, welcher zum Ermitteln einer Verstellposition eines zum Verschwenken des Schwingspiegels vorgesehenen Aktuators eingerichtet ist. Der Positionsgeber kann zum Beispiel zum Ermitteln einer Längsposition eines Magneten oder eines Kolbens eines translatorisch wirkenden Aktuators eingerichtet sein, wobei die Winkelposition aus der ermittelten Längsposition unter Berücksichtigung von geometrischen Parametern wie z.B. Längen, Abständen und Winkelbeziehungen eines zur Umwandlung der translatorischen Bewegung in die Schwenkbewegung zwischengeschalteten Getriebes, z. B. der vorstehend genannten Schubstange, bestimmt werden kann. Für ein Verschwenken des Schwingspiegels in eine vorgegebene Winkelposition kann beispielsweise ein als Schrittmotor ausgestalteter Aktuator oder ein sonstiger vorstehend beschriebener translatorisch oder rotatorisch wirkender Aktuator, welcher ggf. über ein Dämpfungselement mit dem Schwingspiegel gekoppelt sein kann, vorgesehen sein. Die erfasste Winkel- bzw. Längsposition kann bevorzugt unter Verwendung eines Regelalgorithmus oder einer Regelschaltung, z.B. einer PID-Regelung, in eine Ansteuerung des Schwingspiegels einfließen.

Weitere vorteilhafte Ausführungsformen ergeben sich aus den Unteransprüchen, der Beschreibung und den Zeichnungen.

Die Erfindung wird nachfolgend anhand von Ausführungsbeispielen mit Bezug auf die Zeichnungen beschrieben:
Es zeigen:
- Fig. 1a: eine schematische Darstellung einer Codelesevorrichtung gemäß dem Stand der Technik;
- Fig. 1b: eine schematische Darstellung einer Abtastung eines eindimensionalen und eines zweidimensionalen optoelektronischen Codes gemäß dem Stand der Technik;
- Fig. 2: eine schematische Darstellung einer Codelesevorrichtung gemäß einem ersten Ausführungsbeispiel in verschiedenen Betriebspositionen;
- Fig. 3a: eine schematische Darstellung einer Codelesevorrichtung gemäß einem zweiten Ausführungsbeispiel in einer Seitenansicht;
- Fig. 3b: die Codelesevorrichtung gemäß Fig. 3a in einer Draufsicht;
- Fig. 4: eine schematische Darstellung einer Codelesevorrichtung gemäß einem dritten Ausführungsbeispiel in verschiedenen Betriebspositionen; und
- Fig. 5a und 5b: schematische Darstellungen von Abtastungen eines zweidimensionalen optoelektronischen Codes.

Im Folgenden werden gleiche oder gleichartige Elemente oder Komponenten mit denselben Bezugszeichen bezeichnet.

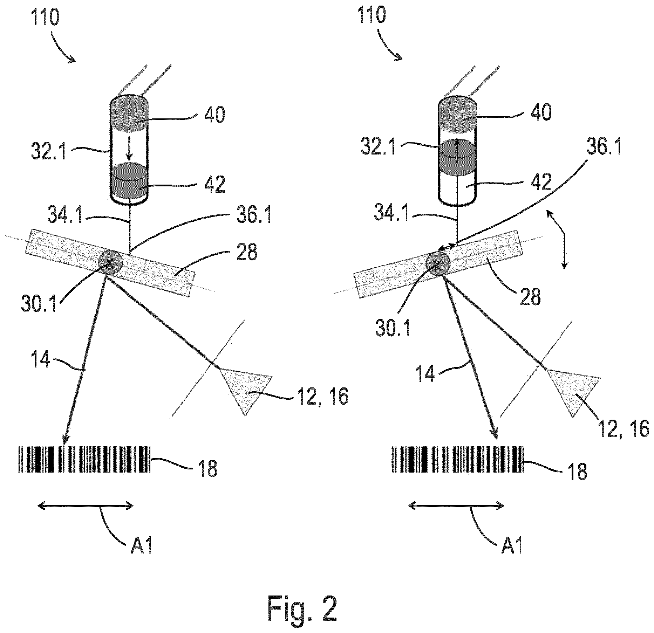

In den Fig. 1a und 2 bis 4 sind verschiedene Codelesevorrichtungen dargestellt, für welche zunächst die gemeinsamen Merkmale erläutert werden. Fig. 1a zeigt eine Codelesevorrichtung 10 gemäß dem Stand der Technik, während Fig. 2 bis 4 Codelesevorrichtungen 110, 210, 310 gemäß verschiedenen Ausführungsbeispielen der Erfindung zeigen. Die Codelesevorrichtungen 10, 110, 210, 310 umfassen jeweils eine Beleuchtungseinrichtung 12, welche dazu eingerichtet ist, einen Sendelichtstrahl 14 zum Erzeugen eines Sendelichtflecks auf einem zu erfassenden eindimensionalen optischen Code 18 oder einem zweidimensionalen optoelektronischen Code 20 auszusenden. Das von dem optoelektronischen Code 18, 20 remittierte Sendelicht wird auf dem gleichen Weg in Richtung eines optoelektronischen Sensors 16 zurückgesendet, weshalb das Bezugszeichen 14 zugleich auch einen Empfangslichtstrahl kennzeichnet. Die Beleuchtungseinrichtung 12 und der optoelektronische Sensor 16 sind hier rein schematisch als gemeinsame Einheit dargestellt und können neben einer Lichtquelle, beispielsweise einem Laser, auch verschiedene strahlformende Elemente wie Linsen, Hohlspiegel, diffraktive optische Elemente und strahlteilende Elemente umfassen, wobei diese Aufzählung rein beispielhaft und nicht abschließend ist. Die Anordnung der Beleuchtungseinrichtung 12 und des optoelektronische Sensors 16 in einer gemeinsamen Einheit ist rein beispielhaft, so dass beide auch als getrennte Einheiten ausgebildet sein können.

Die Codelesevorrichtungen 10, 110, 210, 310 umfassen eine jeweilige Abtastvorrichtung, welche dazu eingerichtet ist, durch Ablenken des Sendelichtstrahls 14 den optoelektronischen Code 18, 20 mit dem Sendelichtfleck sequentiell in zumindest einer ersten Abtastrichtung abzutasten. Entsprechend der hellen und dunklen Code-Bereiche wird Empfangslicht mit wechselnder Intensität von dem optoelektronischen Sensor 16 erfasst und in elektrische Empfangssignale umgewandelt. Die elektrischen Empfangssignale werden an eine mit dem optoelektronischen Sensor 16 und bevorzugt auch mit der Beleuchtungseinrichtung 12 und/oder der Abtastvorrichtung verbundenen Steuereinrichtung (nicht dargestellt) übermittelt. Die Steuereinrichtung erzeugt aus den Empfangssignalen einen elektronischen Code, welcher in dem optoelektronischen Code 18, 20 codierte Informationen umfasst. Die sequentiell erzeugten Empfangssignale können beispielsweise in Form von seriellen RLC-Daten (RLC, von Englisch: Run Length Code, deutsch: Lauflängencodierung), gespeichert werden oder auch in ein standardisiertes Bildformat wie BMP oder JPEG konvertiert werden. Die Daten können in Form von Grauwerten erfasst werden oder auch in Schwarz-Weiß-Werte konvertiert werden.

Bei der Codelesevorrichtung 10 gemäß dem Stand der Technik (Fig. 1a) umfasst die Abtastvorrichtung ein Polygonspiegelrad 24 oder Facettenrad, welches an seinem Umfang insgesamt acht Spiegelflächen 26 aufweist. Das Polygonspiegelrad 24 rotiert mit gleichbleibender Geschwindigkeit um eine Drehachse, so dass der Sendelichtstrahl 14 jeweils von einer bestimmten Spiegelfläche 26 reflektiert wird. Aufgrund der Drehbewegung ändert sich die Winkelausrichtung der jeweiligen Spiegelfläche 26 relativ zum Empfangslichtstrahl, wodurch der optoelektronische Code 18 in seiner Haupterstreckungsrichtung vom Sendelichtstrahl 14 abgetastet wird.

Bei der Codelesevorrichtung 10 besteht eine Problematik darin, dass die Spiegelflächen 26 in leicht unterschiedlicher Weise in Bezug auf die Drehachse des Polygonspiegelrads 24 verkippt sein können. Wie in Fig. 1b zu erkennen ist, führt das dazu, dass der Empfangslichtstrahl 14 bzw. der daraus erzeugte Sendelichtfleck 14 in Abhängigkeit davon, von welcher jeweiligen Spiegelfläche 26 der Sendelichtstrahl 14 reflektiert wurde, entlang unterschiedlicher, parallel voneinander beabstandeter Abtastlinien 22 entlanggeführt wird. Sofern mit einer derartigen Codelesevorrichtung 10 lediglich ein eindimensionaler Code 18, beispielsweise ein Barcode oder Strichcode mit einer gewissen Ausdehnung quer zur Abtastrichtung abgetastet werden soll, ist diese Eigenschaft, die auch als Jitter bezeichnet wird, relativ unproblematisch. Soll jedoch ein zweidimensionaler Code 20, beispielsweise ein QR-Code oder ein anderer Matrixcode, abgetastet werden, führt dies dazu, dass innerhalb der Codematrix in Abhängigkeit von der reflektierenden Spiegelfläche unterschiedliche Codezeilen abgetastet werden. Dadurch ist eine fehlerfreie Erfassung eines zweidimensionalen Codes 20 nicht möglich.

Diese Problematik wird bei den Codelesevorrichtungen 110, 210, 310 gemäß den Ausführungsbeispielen (Fig. 2 bis 4) vermieden. Die Abtastvorrichtungen dieser erfindungsgemäßen Codelesevorrichtungen 110, 210, 310 umfassen einen jeweiligen Schwingspiegel 28, welcher um eine erste Schwenkachse 30.1 und/oder um eine zweite Schwenkachse 30.2 schwenkbar ist. Da der Sendelichtstrahl 14 stets von derselben Spiegelfläche des Schwingspiegels 28 abgelenkt wird, ist der Jitter oder die Parallelverschiebung der Abtastlinien erheblich reduziert und im Prinzip im Wesentlichen nur noch durch ein etwaiges geringfügiges Lagerspiel der Schwenkachsen 30.1, 30.2 definiert.

Bei dem Ausführungsbeispiel gemäß Fig. 2 erfolgt der Antrieb des Schwingspiegels 28 über einen linear wirkenden Aktuator 32.1, welcher im Ausführungsbeispiel als Solenoidantrieb mit einer Zylinderspule 40 und einem Permanentmagneten 42 ausgebildet ist. Der Permanentmagnet 42 wird durch einen Stromfluss durch die Zylinderspule 40 in Abhängigkeit von der Polarität wahlweise angezogen oder abgestoßen. Die Linearbewegung des Permanentmagneten 42 wird über eine Schubstange 34.1, die in einem von der Schwenkachse 30.1 beabstandeten Koppelpunkt 36.1 an dem Schwingspiegel 28 angelenkt ist, auf den Schwingspiegel 28 übertragen und versetzt diesen in eine oszillierende Schwenkbewegung. Die Schwenkachse 30.1 verläuft bei diesem Ausführungsbeispiel senkrecht zur Zeichenebene und führt den Sendelichtstrahl 14 in der durch einen Doppelpfeil dargestellten Abtastrichtung A.1 über den optoelektronischen Code 18.In Fig. 2 sind zwei unterschiedliche Betriebsstellungen dargestellt.

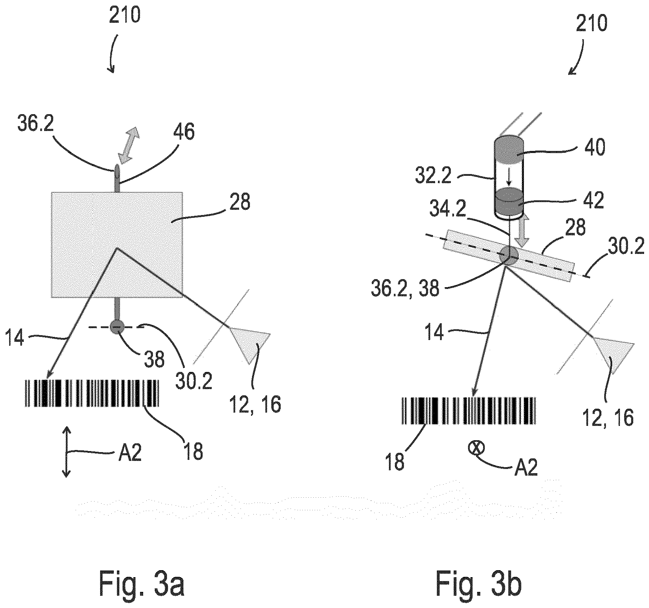

Bei der Codelesevorrichtung 210 gemäß dem Ausführungsbeispiel von Fig. 3a und 3b ist eine Verschwenkung des Schwingspiegels 28 um eine zweite Schwenkachse 30.2 vorgesehen, welche im Vergleich mit der Codelesevorrichtung 110 (Fig. 2) senkrecht zu der ersten Schwenkachse 30.1 verläuft. Der Schwingspiegel 28 ist an einem Stab 46 befestigt, welcher mit seinem einen freien Ende in einem Lagerpunkt 38 kippbar gelagert ist (vgl. Fig. 3a). Das gegenüberliegende freie Ende des Stabes 46 bildet einen Koppelpunkt 36.2 für eine zweite Schubstange 34.2. Der Koppelpunkt 36.2 und der Lagerpunkt 38 liegen in der Draufsicht von Fig. 3b übereinander. Wie in Fig. 3b gut zu erkennen ist, verbindet die Schubstange 34.2 einen zweiten linear wirkenden Aktuator 32.2 mit dem Stab 46 bzw. dem Schwingspiegel 28. Der zweite Aktuator 32.2 gleicht in seinem Aufbau und seiner Funktionsweise dem ersten Aktuator 32.1 (Fig. 2). Durch die Linearbewegung des Permanentmagneten 42 wird der Schwingspiegel 28 um die zweite Schwenkachse 30.2 verschwenkt, welche durch den Lagerpunkt 38 verläuft (siehe Fig. 3a).

Durch die oszillierende Schwenkbewegung um die zweite Schwenkachse 30.2 wird der Sendelichtstrahl 14 in einer zweiten Abtastrichtung A.2 abgelenkt, welche senkrecht zu der ersten Abtastrichtung A.1 (Fig. 2) verläuft.

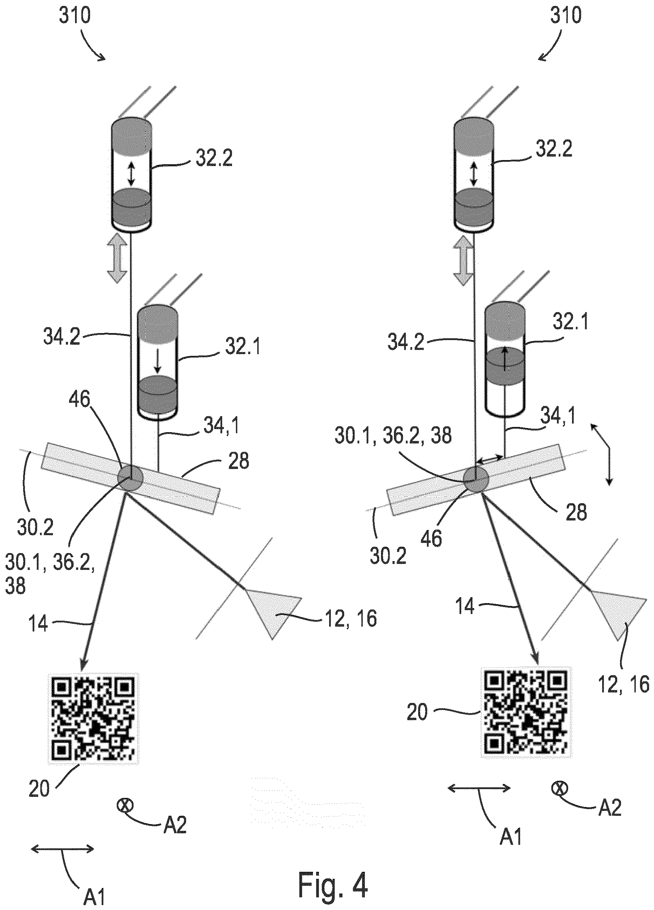

Die Codelesevorrichtung 310 gemäß dem Ausführungsbeispiel von Fig. 4 stellt bezüglich der Abtastvorrichtung eine Kombination der Codelesevorrichtungen 110 (Fig. 2) und 210 (Fig. 3a und 3b) dar. Demnach ist der Schwingspiegel 28 sowohl um eine um die erste Schwenkachse 30.1 als auch um die senkrecht dazu verlaufende zweite Schwenkachse 30.2 verschwenkbar. Dadurch kann insbesondere auch ein zweidimensionaler Code in beide Richtungen abgetastet werden, wobei in Fig. 4 die erste Abtastrichtung A.1 in der Zeichenebene in horizontaler Richtung und die zweite Abtastrichtung A.2 senkrecht zur Zeichenebene verläuft. Der Stab 46 dient hierbei nicht nur als Träger für den Schwingspiegel 28, sondern definiert zugleich auch die erste Schwenkachse 30.1. Hierfür sind der Lagerpunkt 32.2 und der Koppelpunkt 38 derart ausgebildet, dass neben der Kippung um die zweite Schwenkachse 30.2 zusätzlich auch eine Rotation um die erste Schwenkachse 30.1 zugelassen wird. Der Lagerpunkt 38 kann beispielsweise durch an einem Gehäuse der Codelesevorrichtung 310 angeordnetes Kugelgelenk realisiert werden.

Neben einer Abtastung eines zweidimensionalen optoelektronischen Codes 20 kann mit der Codelesevorrichtung 310 gemäß Fig. Fig. 4 auf die Relativlage der Abtastlinie 22 quer zu der ersten Abtastrichtung A.1 verschoben werden. Dadurch ist es beispielsweise möglich, in zuverlässiger Weise optoelektronische Codes zu erfassen, die in unterschiedlichen Positionen bezogen auf eine Relativlage quer zur Abtastrichtung an jeweiligen zu erfassenden Gegenständen angebracht sind.

Bei den Codelesevorrichtungen 110, 210, 310 kann der Schwenkwinkelbereich des Schwingspiegels 28 zum Beispiel jeweils zwischen 30° und 60° betragen. Die Schwingfrequenz des Schwingspiegels 28 um die erste bzw. die zweite Schwenkachse 30.1 bzw. 30.2 kann bei den Codelesevorrichtungen 110, 210, 310 in der Größenordnung von 1000 Hz liegen, wobei bei der zweiachsigen Codelesevorrichtung 310 (Fig. 4) die Schwingfrequenz um die zweite Schwenkachse 30.2 um einen Faktor 100 bis 1000 kleiner sein kann als die Schwingfrequenz um die erste Schwenkachse 30.1. Bei allen Codelesevorrichtungen 110, 210, 310 kann ein einzelner eindimensionaler Code 18 bzw. eine jeweilige Zeile eines zweidimensionalen Codes einfach oder zur Verbesserung der Fehlerrate auch mehrmals nacheinander abgetastet werden.

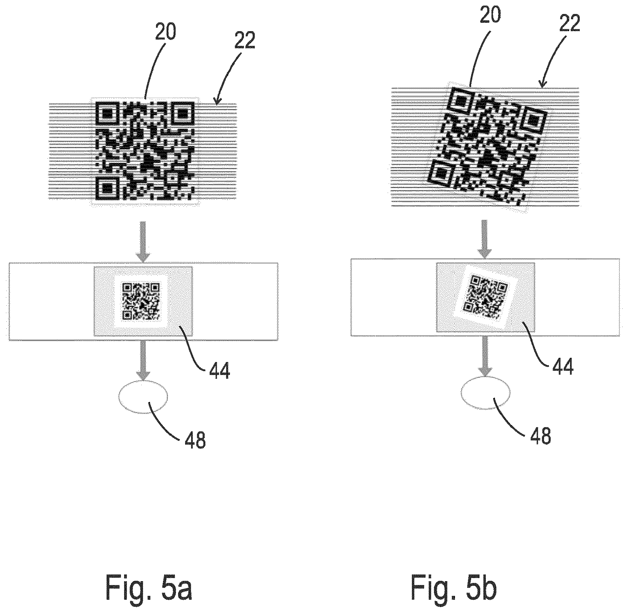

Mit Bezug nun auf Fig. 5a und 5b werden zwei verschiedene Anwendungsfälle für die Erfassung eines zweidimensionalen Codes 20 mit der Codelesevorrichtung 310 (Fig. 4) erläutert. Wie vorstehend erwähnt, kann ein zweidimensionaler Code 20, wie etwa der in Fig. 5a und 5b dargestellte QR-Code, eine Vielzahl von in Reihen und Spalten angeordneten binären Symbolen aufweisen.

Wenn die Zeilen des zweidimensionalen Codes 20 gemäß Fig. 5a parallel zur ersten Abtastrichtung A.1 ausgerichtet sind, kann mit jeder Abtastperiode eine jeweilige Zeile des zweidimensionalen Codes 20 abgetastet und erfasst werden, wobei für eine jeweilige Abtastperiode der Schwingspiegel 28 um die erste Schwenkachse 30.1 verschwenkt wird. Zur Erfassung einer weiteren Zeile des Codes 20 wird der Schwingspiegel 28 entsprechend dem Zeilenabstand des Codes 20 und dem Abstand des Codes 20 von der Codelesevorrichtung der Schwingspiegel um einen kleinen Betrag um die zweite Schwenkachse 30.2 verschwenkt. Durch ein zeilenweises Abtasten des Codes 20 kann ein Bild 44 des Codes 20 erzeugt werden, welcher anschließend in einer Steuereinrichtung 48 weiterverarbeitet werden kann. Gegebenenfalls kann bei der Auswertung des Bildes 44 der zu verarbeitende Bildbereich durch Definieren eines Auswahlbereichs (ROI, von English Region Of Interest) oder durch Zuschneiden des Bildes auf einen solchen Auswahlbereich reduziert werden.

Bei dem in Fig. 5b dargestellten Fall ist der Code 20 schräg zu den in der ersten Abtastrichtung A.1 verlaufenden Abtastlinien 22 ausgerichtet. Auch in diesem Fall kann der Code 20 in der mit Bezug auf Fig. 5a beschriebenen Weise abgetastet werden.

Entsprechend der Verdrehung des Codes 20 erhält das auf diese Weise erzeugte Bild 44 ein verdrehtes Abbild des Codes 20. Diese Verdrehung kann durch Mittel der Bildverarbeitung in der Steuereinrichtung 48 korrigiert werden, so dass anschließend eine Auswertung einer ausgerichteten Abbildung des Codes 20 erfolgen kann. Um für einem schräg zur Abtastrichtung A.1 bzw. A.2 ausgerichteten Code 20 eine vollständige Erfassung des Codes 20 zu ermöglichen, muss im Vergleich zu der in Fig. 5a dargestellten Situation die Abtastfrequenz sowohl in der ersten Abtastrichtung A.1 als auch in der zweiten Abtastrichtung A.2 erhöht werden. Entsprechend dem Nyquist-Shannon-Abtasttheorem muss die Abtastfrequenz sowohl in horizontaler als auch in vertikaler Richtung mindestens dem Zweifachen der Ortsfrequenz des zweidimensionalen Codes 20 entsprechen. Insofern ist die Dichte der Darstellung der Abtastlinien 22 in Fig. 5b nur schematisch und geringer als theoretisch erforderlich.

Die Codelesevorrichtungen 110, 210, 310 gemäß den Ausführungsbeispielen von Fig. 2 bis 4 ermöglichen zumindest in bestimmten Anwendungsfällen eine einfache Erfassung der in dem optoelektronischen Code 18, 20 erhaltenen Informationen durch eine Lauflängencodierung (RLC, von Englisch Run Length Code), was im Vergleich zu einer bildverarbeitungsbasierten Auswertung die Kosten für die erforderlichen Datenverarbeitungsmittel reduziert.

Im Vergleich zu der Codelesevorrichtung 10 gemäß dem Stand der Technik (Fig. 1a) mit einer ein Polygonspiegelrad 24 aufweisenden Abtastvorrichtung kann mit der erfindungsgemäßen schwingspiegelbasierten Lösung ebenfalls eine Reduzierung der Herstellungskosten sowie auch eine Erhöhung der Lebensdauer erzielt werden. Weitere Vorteile der Codelesevorrichtungen 110, 210, 310 gegenüber einer herkömmlichen Codelesevorrichtung 10 bestehen in einer Verkleinerung des notwendigen Bauraums, in einer Vereinfachung der Fertigung und in einer Verminderung der Komplexität durch eine Reduzierung der Anzahl an bewegten Teilen. Noch ein weiterer Vorteil besteht darin, dass im Vergleich zu einem Polygonspiegelrad 24 das dargestellte Antriebskonzept für den Schwingspiegel 28 auch eine Anpassung des Abtastbereichs möglich wird, indem die Auslenkung bzw. der Schwenkbereich des Schwingspiegels 28 eingestellt oder parametriert werden kann.

### Bezugszeichenliste

- 10, 110, 210, 310: Codelesevorrichtung
- 12: Beleuchtungseinrichtung
- 14: Sendelichtstrahl, Empfangslichtstrahl
- 16: Sensor
- 18: eindimensionaler optoelektronischer Code
- 20: zweidimensionaler optoelektronischer Code
- 22: Abtastlinie
- 24: Polygonspiegelrad
- 26: Spiegelfläche
- 28: Schwingspiegel
- 30.1, 30.2: Schwenkachse
- 32.1, 32.2: Aktuator
- 34.1, 34.2: Schubstange
- 36.1, 36.2: Koppelpunkt
- 38: Lagerpunkt
- 40: Zylinderspule
- 42: Permanentmagnet
- 44: Bild
- 46: Stab
- 48: Steuereinrichtung

- A.1, A.2: Abtastrichtung

## Patentansprüche

1. Codelesevorrichtung (10, 110, 210, 310) zum Erfassen eines zumindest eindimensionalen optoelektronischen Codes (18, 20), mit einer Beleuchtungseinrichtung (12), welche dazu eingerichtet ist, einen Sendelichtstrahl (14) zum Erzeugen eines Sendelichtflecks auf dem zu erfassenden optoelektronischen Code (18, 20) auszusenden,
einer Abtastvorrichtung, welche einen zumindest um eine erste Schwenkachse (30.1, 30.2) oszillierend schwenkbaren Schwingspiegel (28) umfasst, welcher dazu eingerichtet ist, durch Ablenken des Sendelichtstrahls (14) den optoelektronischen Code (18, 20) mit dem Sendelichtfleck sequentiell in zumindest einer ersten Abtastrichtung abzutasten,
einem optoelektronischen Sensor (16), welcher dazu eingerichtet ist, von dem optoelektronischen Code (18, 20) remittiertes Sendelicht zu erfassen und in elektrische Empfangssignale umzuwandeln, und
einer Steuereinrichtung (48), welche mit dem optoelektronischen Sensor (16) und der Abtastvorrichtung zusammenwirkt, um die Abtastvorrichtung zu steuern und aus den Empfangssignalen einen elektronischen Code zu erzeugen, welcher in dem optoelektronischen Code (18, 20) codierte Informationen umfasst, und welche mit der Abtastvorrichtung zusammenwirkt, um eine Winkelposition des Schwingspiegels (28) direkt oder indirekt zu erfassen und/oder den Schwingspiegel (28) in eine vorgegebene Winkelposition zu verschwenken.

2. Codelesevorrichtung (10, 110, 210, 310) nach Anspruch 1,
**dadurch gekennzeichnet,**
**dass** der Schwingspiegel (28) zusätzlich um eine zweite Schwenkachse (30.2) oszillierend schwenkbar ist, um den optoelektronischen Code (18, 20) durch Ablenken des Sendelichtstrahls (14) mit dem Sendelichtfleck sequentiell zusätzlich in einer zweiten Abtastrichtung abzutasten, wobei bevorzugt die zweite Schwenkachse (30.2) senkrecht zu der ersten Schwenkachse (30.1) verläuft.

3. Codelesevorrichtung (10, 110, 210, 310) nach Anspruch 2,
**dadurch gekennzeichnet,**
**dass** der zu erfassende optoelektronischen Code (20) zweidimensional ist, wobei die Abtastvorrichtung dazu eingerichtet ist, den optoelektronischen Code (20) zeilenweise abzutasten.

4. Codelesevorrichtung (10, 110, 210, 310) nach einem der vorhergehenden Ansprüche,
**dadurch gekennzeichnet,**
**dass** die Abtastvorrichtung zumindest einen translatorisch wirkenden Aktuator (32.1, 32.2) umfasst, welcher mit dem Schwingspiegel (28) über eine Schubstange (34.1, 34.2) zusammenwirkt, um den Schwingspiegel (28) um eine jeweilige Schwenkachse (30.1, 30.2) zu verschwenken.

5. Codelesevorrichtung (10, 110, 210, 310) nach Anspruch 4,
**dadurch gekennzeichnet,**
**dass** die Schubstange (34.1, 34.2) in einem Koppelpunkt (36.1, 36.2) an dem Schwingspiegel (28) angelenkt ist, wobei der Koppelpunkt (36.1, 36.2) von der zugeordneten Schwenkachse (30.1, 30.2) beabstandet ist.

6. Codelesevorrichtung (10, 110, 210, 310) nach Anspruch 4 oder 5
**dadurch gekennzeichnet,**
**dass** der translatorisch wirkende Aktuator (32.1, 32.2) als ein Solenoidantrieb ausgebildet ist, welcher eine Spule (40), bevorzugt eine Zylinderspule (40), und einen Permanentmagneten (42) umfasst, der mittels eines von der Spule (40) erzeugten Magnetfeldes linear versetzbar ist.

7. Codelesevorrichtung (10, 110, 210, 310) nach Anspruch 6,
**dadurch gekennzeichnet,**
**dass** der Solenoidantrieb eine Dämpfungseinrichtung, bevorzugt ein Reibungselement oder ein Federelement umfasst, welche dazu eingerichtet ist, eine Bewegung des Permanentmagneten (42) zu dämpfen.

8. Codelesevorrichtung (10, 110, 210, 310) einem der vorhergehenden Ansprüche,
**dadurch gekennzeichnet,**
**dass** der Schwingspiegel (28) zusätzlich um eine zweite Schwenkachse (30.2) oszillierend schwenkbar ist,
wobei die Abtastvorrichtung einen ersten translatorisch wirkenden Aktuator (32.1) umfasst, welcher mit dem Schwingspiegel (28) über eine erste Schubstange (34.1), welche in einem von der ersten Schwenkachse (30.1, 30.2) beabstandeten ersten Koppelpunkt (36.1) an dem Schwingspiegel (28) angelenkt ist, zusammenwirkt, um den Schwingspiegel (28) um die erste Schwenkachse (30.1) zu verschwenken,
wobei die erste Schwenkachse (30.1) in einem Lagerpunkt (38) um die zweite Schwenkachse (30.2) kippbar und um die erste Schwenkachse (30.1) rotierbar gelagert ist, und
wobei die Abtastvorrichtung einen zweiten translatorisch wirkenden Aktuator (32.2) umfasst, welcher mit der ersten Schwenkachse (30.1, 30.2) über eine zweite Schubstange (34.1), welche in einem von dem Lagerpunkt (38) beabstandeten zweiten Koppelpunkt (36.1) an der ersten Schwenkachse (30.1) angelenkt ist, zusammenwirkt, um den Schwingspiegel (28) um die zweite Schwenkachse (30.2) zu verschwenken.

9. Codelesevorrichtung (10, 110, 210, 310) nach einem der Ansprüche 1 bis 7, **dadurch gekennzeichnet,**
**dass** die Abtastvorrichtung zumindest einen rotatorisch wirkenden Aktuator umfasst, welcher mit dem Schwingspiegel (28) zusammenwirkt, um den Schwingspiegel (28) direkt oder indirekt um eine jeweilige Schwenkachse (30.1, 30.2) zu verschwenken.

10. Codelesevorrichtung (10, 110, 210, 310) nach einem der vorhergehenden Ansprüche,
**dadurch gekennzeichnet,**
**dass** der zu erfassende optoelektronische Code (18, 20) binäre Symbole umfasst, welche durch helle und dunkle Codebereiche definiert sind.
